# EUROPEAN PATENT APPLICATION

(11) **EP 3 723 301 A1**
(43) Date of publication of application: **14.10.2020**
(21) Application number: 19738615.4
(22) Date of filing: 08.01.2019
(51) Int. Cl.: H04B 10/00

(54) **WAVELENGTH LOCKING DEVICE AND METHOD**

(30) Priority: 10.01.2018 CN 201810021055
(71) Applicant: ZTE Corporation, Shenzhen, Guangdong 518057 (CN)
(72) Inventor: WU, Chengbin, Shenzhen, Guangdong 518057 (CN); GU, Yuan, Shenzhen, Guangdong 518057 (CN); ZHONG, Changlong, Shenzhen, Guangdong 518057 (CN)
(74) Representative: Regimbeau
(86) International application number: PCT/CN2019/070843
(87) International publication number: WO 2019/137371

(57) **Abstract**

Provided is a wavelength locking device, including a wavelength identifier detector configured to receive an optical multiplexing sampling signal, and determine an optical signal carrying a wavelength identifier as an optical signal to be wavelength-locked; a tunable bandpass filter configured to select, according to wavelength information of at least one optical signal to be wavelength-locked, the at least one optical signal to be wavelength-locked, and output the at least one optical signal to be wavelength-locked; a wavelength locker configured to acquire wavelength deviation information of each optical signal to be wavelength-locked; and an associated signal generator configured to generate, according to wavelength deviation information corresponding to the associated signal generator, an associated signal of an optical signal to be wavelength-locked corresponding to the associated signal generator, so that the obtained associated signal is modulated onto a local service signal corresponding to the optical signal to be wavelength-locked corresponding to the associated signal generator. Further provided is a wavelength locking method.

## Description

The present application claims priority to Chinese Patent Application No. 201810021055.9 filed with the CNIPA on January 10, 2018, the disclosure of which is incorporated herein by reference in its entirety.

### TECHNICAL FIELD

The present application relates to, but is not limited to, the optical communication technology, for example, to a wavelength locking device and method based on a dense wavelength division multiplexing system.

### BACKGROUND

A dense wavelength division multiplexing (DWDM) technology is a technology for transmitting multiple specified wavelengths at a certain interval in one optical fiber. The DWDM technology can achieve large-capacity transmission, and is widely applied to a long-distance backbone network, a metropolitan area aggregation network, a metropolitan area access network, and the like.

With development of the mobile communication technology, in fourth generation of mobile phone mobile communication technology standards (4G) and fifth generation of mobile phone mobile communication technology standards (5G) networks, in order to provide higher bandwidth, a wireless interface rate is continuously increasing and optical fiber resources are increasingly in shortage, so that the DWDM technology also begins to be applied to wireless access networks and is used on a large scale.

For the DWDM system, it is required that the frequency of each specified wavelength among the multiple wavelengths transmitted by the system can maintain certain stability, thus maintaining the stable operation of the transmission system. Therefore, wavelength locking is a key technology of the system.

In the related art, in order to maintain the stability of wavelengths, in the dense wavelength division multiplexing system, a special wavelength locker is usually built in each transmitter and is configured to perform wavelength locking on the output wavelength of each transmitter independently to achieve the stability of wavelengths. However, this method requires each transmitter to be configured with a wavelength locker and a control circuit, thus undoubtedly increasing the system cost. For the wireless access network, especially the fronthaul network of the wireless access network, such technology is quite high in cost and cannot be used on a large scale.

### SUMMARY

The present disclosure provides a wavelength locking device and method, which can flexibly achieve wavelength monitoring and locking for a transmitter, and can reduce cost.

In an embodiment, a wavelength locking device is provided in the present disclosure and includes a wavelength identifier detector, a tunable bandpass filter, a wavelength locker and at least one associated signal generator, the at least one associated signal generator has a one-to-one correspondence with an optical signal with at least one wavelength in an optical multiplexing signal.

The wavelength identifier detector is configured to receive an optical multiplexing sampling signal, and determine an optical signal carrying a wavelength identifier in the optical multiplexing sampling signal as an optical signal to be wavelength-locked, where the wavelength identifier is used for identifying at least one optical signal to be wavelength-locked.

The tunable bandpass filter is configured to select, according to wavelength information of the at least one optical signal to be wavelength-locked, the at least one optical signal to be wavelength-locked from the optical multiplexing sampling signal, and output the at least one optical signal to be wavelength-locked.

The wavelength locker is configured to acquire wavelength deviation information of each of the at least one optical signal to be wavelength-locked.

Each of the at least one associated signal generator is configured to generate, according to wavelength deviation information received accordingly, an associated signal of an optical signal to be wavelength-locked corresponding to the associated signal generator, so that the obtained associated signal is modulated onto a local service signal corresponding to the optical signal to be wavelength-locked corresponding to the associated signal generator.

A wavelength locking method is further provided in the present application and includes the following steps.

A remote optical multiplexing signal is acquired, where an optical signal to be wavelength-locked in the optical multiplexing signal carries a wavelength identifier.

At least one optical signal to be wavelength-locked is determined according to the wavelength identifier.

Wavelength deviation information of each of the at least one optical signal to be wavelength-locked is acquired.

An associated signal, having a one-to-one correspondence with the wavelength deviation information, of an optical signal to be wavelength-locked is generated according to the acquired wavelength deviation information, so that the obtained associated signal is modulated onto a local service signal corresponding to the optical signal to be wavelength-locked corresponding to the associated signal.

### BRIEF DESCRIPTION OF DRAWINGS

The drawings are provided for a further understanding of the technical solutions of the present application, and constitute a part of the description. The drawings and the embodiments of the present application are used to explain the technical solutions of the present application, and not intended to limit the technical solutions of the present application.
FIG. 1 is a schematic diagram illustrating an architecture for achieving wavelength locking in the related art;
FIG. 2 is a schematic diagram illustrating a structure of a wavelength locking device according to the present application; and
FIG. 3 is a flowchart of a wavelength locking method according to the present application.

### DETAILED DESCRIPTION

If not in collision, the embodiments described herein and the features thereof can be combined with each other.

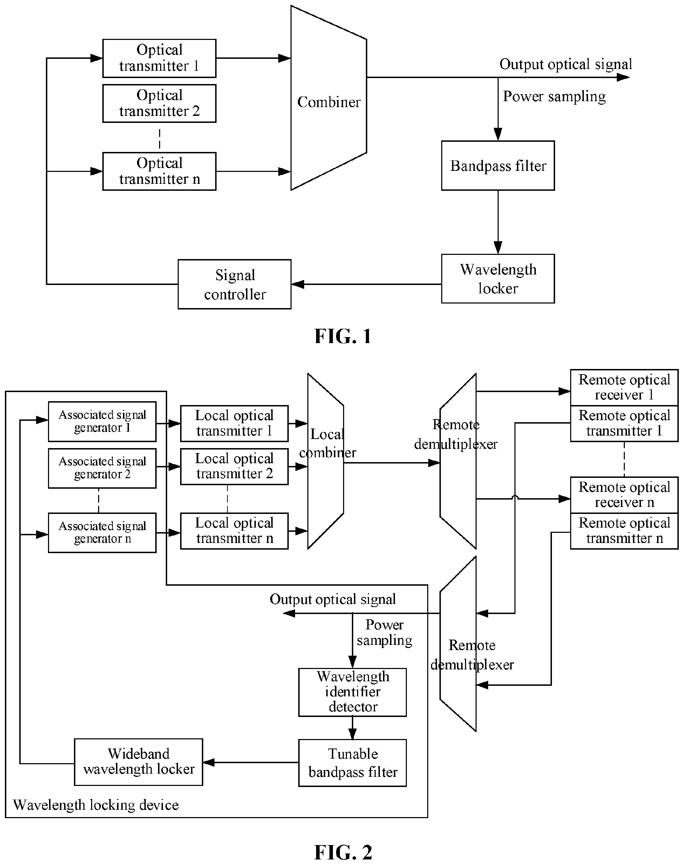

FIG. 1 is a schematic diagram illustrating an architecture for achieving wavelength locking in the related art, where a centralized monitoring manner is adopted in the architecture, that is, one external wavelength locker is used for multiple wavelengths. As shown in FIG. 1, after multiple optical transmitters (such as optical transmitter 1, optical transmitter 2, and optical transmitter n in FIG. 1) emit optical signals with different wavelengths, the optical signals of different wavelengths are combined by a combiner into an optical multiplexing signal for output; power sampling is performed on the optical multiplexing signal on an output channel according to a certain proportion to acquire an optical multiplexing sampling signal; the optical multiplexing sampling signal passes through a bandpass filter, and optical signals with different wavelengths in the optical multiplexing sampling signal are selected for output (since the optical multiplexing sampling signal includes multiple wavelengths, different wavelengths are selected through the bandpass filter and output separately); the output optical signals pass through a centralized wavelength locker, and the wavelength deviation corresponding to the optical signal of each length is obtained; and finally, after the corresponding wavelength deviation compensation control amount is calculated through the signal controller, each calculated deviation compensation control amount is output to a corresponding optical transmitter for wavelength adjustment.

In the wavelength monitoring and locking process of the wavelength locking method shown in FIG. 1, the wavelength adjustment information, i.e., the deviation compensation control amounts, is sent to the local transmitters by using the centralized wavelength locker and through the signal controller of the local end (i.e., the optical transmitter 1, the optical transmitter 2 ... the optical transmitter n in FIG. 1), thus completing the wavelength adjustment of the local transmitters.

On one hand, in the wavelength locking manner shown in FIG. 1, monitoring and locking processing is performed on optical signals of all wavelengths, that is, channels that do not transmit optical signals will also be processed, thus reducing the sampling and adjustment speed; on the other hand, for a wireless access network, especially the frontfaul network, wavelength monitoring and locking of a remote transmitter is usually required, however, the remote transmitter is located at the top of the tower of a base station, the roof of a building, a wire pole and other positions and is not suitable for installing the local wavelength locking device shown in FIG. 1, and the remote transmitter does not have a signal controller, so the wavelength locking method shown in FIG. 1 cannot achieve wavelength locking of the remote transmitter.

FIG. 2 is a schematic diagram illustrating a structure of a wavelength locking device according to the present application. As shown in FIG. 2, the wavelength locking device includes at least a wavelength identifier detector, a tunable bandpass filter, a wavelength locker and at least one associated signal generator. The at least one associated signal generator has a one-to-one correspondence with an optical signal with at least one wavelength in an optical multiplexing signal.

The wavelength identifier detector is configured to receive an optical multiplexing sampling signal, and determine an optical signal carrying a wavelength identifier in the optical multiplexing sampling signal as an optical signal to be wavelength-locked. The wavelength identifier is used for identifying at least one optical signal to be wavelength-locked.

In an embodiment, content of the identifier of each optical signal to be wavelength-locked may be different.

In an embodiment, the wavelength identifier may be a wavelength label. Accordingly, the wavelength identifier detector is a wavelength label detector.

The tunable bandpass filter (e.g., a broadband filter that can achieve filtering of multiple wavelengths) is configured to select, according to wavelength information of the at least one optical signal to be wavelength-locked, the at least one optical signal to be wavelength-locked from the optical multiplexing sampling signal, and output the at least one optical signal to be wavelength-locked.

The wavelength locker is configured to acquire wavelength deviation information of each of the at least one optical signal to be wavelength-locked.

Each of the at least one associated signal generator is configured to generate, according to wavelength deviation information received accordingly, an associated signal of an optical signal to be wavelength-locked corresponding to the associated signal generator, so that the obtained associated signal is modulated onto a local service signal corresponding to the optical signal to be wavelength-locked corresponding to the associated signal generator.

In an embodiment, the associated signal generator is further configured to modulate the obtained associated signal onto the local service signal corresponding to the optical signal to be wavelength-locked; alternatively, the local transmitter is further configured to modulate the associated signal from the associated signal generator onto the local service signal of the optical signal to be wavelength-locked.

In an embodiment, the device further includes a power sampler (not shown in FIG. 2) configured to perform power sampling on a remote optical multiplexing signal to acquire the optical multiplexing sampling signal.

In the wavelength locking device of the present application, an optical signal to be wavelength-locked is selected and processed by adopting the manner of a combination of a wavelength identifier and a corresponding channel signal, so that the processing speed is increased, wavelength monitoring and locking of the transmitter is achieved flexibly, and the cost is reduced. Moreover, the remote wavelength to be locked is accurately identified through the wavelength identifier, and the associated signal (including wavelength modulation information) is transferred through the local transmitter to the remote receiver to drive the remote transmitter to adjust the wavelength of the remote transmitter itself, achieving accurate locking of the wavelength of the remote transmitter. Through the one-to-one combination of the wavelength identifier and the associated signal, the effect of wavelength locking of the remote transmitter is achieved without remote control, and the wavelength stability of the system is improved.

In an embodiment, the wavelength identifier detector is configured to: receive the optical multiplexing sampling signal from the power sampler, determine whether to perform wavelength locking on the wavelength according to whether an optical signal of a wavelength in the optical multiplexing sampling signal carries a wavelength identifier, and determine the optical signal carrying the wavelength identifier among optical signals of all wavelengths in the optical multiplexing sampling signal as the optical signal to be wavelength-locked; and record the wavelength information of the optical signal to be wavelength-locked, and output the wavelength information for wavelength locking to the tunable bandpass filter.

In an embodiment, the tunable bandpass filter is configured to: select, according to the wavelength information for locking output from the wavelength identifier detector, the optical signal to be locked from the optical multiplexing sampling signal, and output the at least one optical signal to be locked.

In an embodiment, the wavelength locker is configured to: for the at least one optical signal to be wavelength-locked, compare an optical wavelength corresponding to each of the at least one optical signal to be wavelength-locked with a preset standard wavelength, and calculate a wavelength deviation value of each of the at least one optical signal to be wavelength-locked, where the wavelength deviation value includes a wavelength deviation direction and a wavelength deviation magnitude; and output the wavelength deviation value of each of the at least one optical signal to be wavelength-locked.

In an embodiment, the associated signal generator is configured to: identify a wavelength deviation value corresponding to the associated signal generator, and fill the wavelength deviation value into an associated signal frame; encode the associated signal frame to generate the associated signal; and modulate the generated associated signal onto a locally transmitted service signal corresponding to the optical signal to be wavelength-locked corresponding to the associated signal generator.

In an embodiment, the associated signal generator may be a pilot tone signal generator, and accordingly, the associated signal frame is a pilot tone signal frame and the associated signal is a pilot tone signal.

In an embodiment, the associated signal generator may be an optical transport network (OTN) overhead signal generator, and accordingly, the associated signal frame is an OTN overhead signal frame and the associated signal is an OTN overhead signal.

In an embodiment, the associated signal generator may be an Ethernet signal generator, and accordingly, the associated signal frame is an Ethernet associated signal frame and the associated signal is an Ethernet associated signal.

Each component of the wavelength locking device in the present application may be a independent physical entity or may be configured in the same physical entity.

The application of the wavelength locking device of the present application will be described below in conjunction with the scenario.

Referring still to FIG. 2, it is assumed that remote optical transmitters emit optical signals of different wavelengths at the remote end. In this embodiment, it is assumed that wavelength identifiers are respectively carried in optical signal 1 to optical signal n (n is a positive integer) (e.g., in optical signal 1, optical signal 3, optical signal 4 and optical signal n); a remote combiner multiplexes the remote optical signals of different wavelengths (i.e., optical signal 1 to optical signal n) into an optical multiplexing signal and transmits the optical multiplexing signal.

The power sampler performs power sampling on the multiplexed optical multiplexing signal output by the remote combiner to obtain an optical multiplexing sampling signal.

The wavelength identifier detector receives the optical multiplexing sampling signal from the power sampler, and determines whether to perform wavelength locking processing on an optical signal according to whether the multiplexed optical signal carries a wavelength identifier. In this embodiment, it is determined that the optical signal 1, the optical signal 3, the optical signal 4 and the optical signal n are optical signals to be wavelength-locked. Therefore, information about wavelengths, i.e., wavelength 1, wavelength 3, wavelength 4 and wavelength n in this embodiment, of the optical signals to be locked are recorded. Then, the optical multiplexing sampling signal and the recorded information about the wavelengths for wavelength locking are output to a tunable bandpass filter.

The tunable bandpass filter selects optical signals to be wavelength-locked, i.e., optical signal 1, optical signal 3, optical signal 4 and optical signal n, one by one according to the information about the wavelengths for wavelength locking output by the wavelength identifier detector, and outputs the optical signals to be wavelength-locked, i.e., optical signal 1, optical signal 3, optical signal 4 and optical signal n.

In an embodiment, the technical solution of the present disclosure is not limited to the tunable bandpass filter, and may be other tunable filters capable of selecting optical signals to be wavelength-locked.

A wideband wavelength locker (i.e., a wavelength locker) receives an optical signal to be wavelength-locked output by the tunable bandpass filter, compares the optical power output corresponding to the optical signal with the optical power corresponding to the preset standard wavelength to calculate a wavelength deviation value of the wavelength, where the wavelength deviation value includes a wavelength deviation direction and a wavelength deviation magnitude; the wavelength deviation value of the optical signal is output to an associated signal generator.

For the associated signal generator, n associated signal generators are included corresponding to n wavelengths. The processing process of each associated signal generator is the same. In this embodiment, a first associated signal generator is taken as an example for explanation. A wavelength deviation value of a first optical signal corresponding to a wavelength corresponding to the first associated signal generator is identified, and the wavelength deviation value is filled into an associated signal frame. Then, the associated signal frame is encoded to generate associated signal 1, and then for transmission, the associated signal 1 is modulated onto the locally transmitted service signal corresponding to the wavelength 1. In this embodiment, associated signal generator 1, associated signal generator 3, associated signal generator 4 and associated signal generator n perform the above processing as described in this paragraph. In other words, in this embodiment, the associated signal 1 is modulated onto a locally transmitted service signal corresponding to the wavelength 1 for transmission, associated signal 3 is modulated onto a locally transmitted service signal corresponding to the wavelength 3 for transmission, associated signal 4 is modulated onto a locally transmitted service signal corresponding to the wavelength 4 for transmission, and associated signal n is modulated onto a locally transmitted service signal corresponding to the wavelength n for transmission.

A local optical transmitter generates optical signals of different wavelengths carrying associated signals corresponding to the optical signals to be wavelength-locked; and the local combiner multiplexes and sends the local optical signals of different wavelengths.

A remote demultiplexer demultiplexes the received optical multiplexing signal from the local end into optical signals of different wavelengths for the remote optical receiver to receive.

Remote optical receiver 1 receives a first optical service signal carrying the associated signal 1 from the local end, remote optical receiver 3 receives a third optical service signal carrying the associated signal 3 from the local end, remote optical receiver 4 receives a fourth optical service signal carrying the associated signal 4 from the local end, and remote optical receiver n receives an n-th optical service signal carrying the associated signal n from the local end. The remote optical receiver 1 is taken as an example. The remote optical receiver 1 demodulates an associated signal including a wavelength deviation value from the received optical service signal, performs frame alignment processing on the demodulated associated signal, and extracts the wavelength deviation value including a wavelength deviation direction, a wavelength deviation magnitude, etc., from a corresponding byte, and sends the extracted wavelength deviation value to the remote optical transmitter 1. In this way, the remote transmitter 1 adjusts, according to the wavelength deviation value from the remote optical receiver, the wavelength of the optical signal 1 to be transmitted by the remote transmitter 1 itself, thus achieving remote wavelength locking.

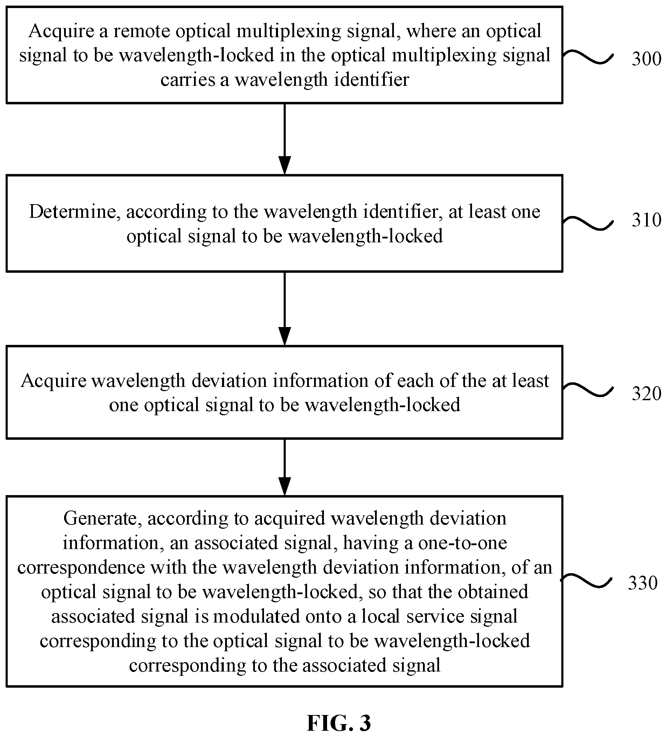

FIG. 3 is a flowchart of a wavelength locking method according to the present application. As shown in FIG. 3, the method includes steps 300 to 330.

In step 300, a remote optical multiplexing signal is acquired, where an optical signal to be wavelength-locked in the optical multiplexing signal carries a wavelength identifier.

In an embodiment, the step 300 may include a step described below.

Power sampling is performed on the remote optical multiplexing signal to acquire an optical multiplexing sampling signal.

In step 310, at least one optical signal to be wavelength-locked is determined according to the wavelength identifier.

In an embodiment, the step 310 includes a step described below.

An optical signal carrying the wavelength identifier in the optical multiplexing sampling signal is determined as the optical signal to be wavelength-locked, and wavelength information of the optical signal to be wavelength-locked is recorded; where the wavelength identifier is used for identifying the at least one optical signal to be wavelength-locked.

In an embodiment, the wavelength identifier may be a wavelength label.

In step 320, wavelength deviation information of each of the at least one optical signal to be wavelength-locked is acquired.

In an embodiment, the step 320 may include a step described below.

An optical wavelength corresponding to each of the at least one optical signal to be wavelength-locked is compared with a preset standard wavelength, and a wavelength deviation value of each of the at least one optical signal to be wavelength-locked is calculated, where the wavelength deviation value includes a wavelength deviation direction and a wavelength deviation magnitude. In an embodiment, the calculation may be performed by using customary technical means of those skilled in the art.

In step 330, an associated signal, having a one-to-one correspondence with the wavelength deviation information, of an optical signal to be wavelength-locked is generated according to acquired wavelength deviation information, so that the obtained associated signal is modulated onto a local service signal corresponding to the optical signal to be wavelength-locked corresponding to the associated signal.

In an embodiment, the step in which the associated signal, having the one-to-one correspondence with the wavelength deviation information, of an optical signal to be wavelength-locked is generated according to acquired wavelength deviation information includes a step described below.

The wavelength deviation value is filled into an associated signal frame; and the associated signal frame is encoded to generate the associated signal.

In an embodiment, the associated signal generator includes one of: a pilot tone signal generator, an optical transport network (OTN) overhead signal generator, or an Ethernet signal generator.

According to the wavelength locking method provided in the present application, a local optical transmitter at which an optical signal is to be wavelength-locked can generate a local optical signal carrying an associated signal; and the corresponding remote optical receiver will receive a local optical service signal carrying the associated signal, thus achieving the purpose of adjusting the remotely transmitted signal according to the associated signal including wavelength deviation information carried in the service signal.

## Claims

1. A wavelength locking device, comprising: a wavelength identifier detector, a tunable bandpass filter, a wavelength locker and at least one associated signal generator, wherein the at least one associated signal generator has a one-to-one correspondence with an optical signal with at least one wavelength in an optical multiplexing signal; wherein:
the wavelength identifier detector is configured to receive an optical multiplexing sampling signal, and determine an optical signal carrying a wavelength identifier in the optical multiplexing sampling signal as an optical signal to be wavelength-locked, wherein the wavelength identifier is used for identifying at least one optical signal to be wavelength-locked;
the tunable bandpass filter is configured to select, according to wavelength information of the at least one optical signal to be wavelength-locked, the at least one optical signal to be wavelength-locked from the optical multiplexing sampling signal, and output the at least one optical signal to be wavelength-locked;
the wavelength locker is configured to acquire wavelength deviation information of each of the at least one optical signal to be wavelength-locked; and
each of the at least one associated signal generator is configured to generate, according to wavelength deviation information received accordingly, an associated signal of an optical signal to be wavelength-locked corresponding to the associated signal generator, so that the obtained associated signal is modulated onto a local service signal corresponding to the optical signal to be wavelength-locked corresponding to the associated signal generator.

2. The wavelength locking device of claim 1, further comprising: a power sampler configured to perform power sampling on a remote optical multiplexing signal to acquire the optical multiplexing sampling signal.

3. The wavelength locking device of claim 1 or 2, wherein the wavelength identifier detector is configured to:
receive the optical multiplexing sampling signal, and determine the optical signal carrying the wavelength identifier among optical signals of all wavelengths in the optical multiplexing sampling signal as the optical signal to be wavelength-locked; and
record the wavelength information of the optical signal to be wavelength-locked, and output the wavelength information for wavelength locking to the tunable bandpass filter.

4. The wavelength locking device of claim 1 or 2, wherein the wavelength locker is configured to:
for the at least one optical signal to be wavelength-locked, compare an optical wavelength corresponding to each of the at least one optical signal to be wavelength-locked with a preset standard wavelength, and calculate a wavelength deviation value of each of the at least one optical signal to be wavelength-locked, wherein the wavelength deviation value comprises a wavelength deviation direction and a wavelength deviation magnitude; and
output the wavelength deviation value of each of the at least one optical signal to be wavelength-locked.

5. The wavelength locking device of claim 1 or 2, wherein each of the at least one associated signal generator is configured to:
identify a wavelength deviation value corresponding to the associated signal generator, and fill the wavelength deviation value into an associated signal frame;
encode the associated signal frame to generate the associated signal; and
modulate the generated associated signal onto a locally transmitted service signal corresponding to the optical signal to be wavelength-locked corresponding to the associated signal generator.

6. The wavelength locking device of claim 5, wherein the associated signal generator comprises one of:
a pilot tone signal generator;
an optical transport network, OTN, overhead signal generator; or
an Ethernet signal generator.

7. A wavelength locking method, comprising:
acquiring a remote optical multiplexing signal, wherein an optical signal to be wavelength-locked in the optical multiplexing signal carries a wavelength identifier;
determining, according to the wavelength identifier, at least one optical signal to be wavel ength-locked;
acquiring wavelength deviation information of each of the at least one optical signal to be wavelength-locked; and
generating, according to the acquired wavelength deviation information, an associated signal, having a one-to-one correspondence with the wavelength deviation information, of an optical signal to be wavelength-locked, so that the obtained associated signal is modulated onto a local service signal corresponding to the optical signal to be wavelength-locked corresponding to the associated signal.

8. The method of claim 7, wherein determining, according to the wavelength identifier, the at least one optical signal to be wavelength-locked comprises:
determining an optical signal carrying the wavelength identifier in an optical multiplexing sampling signal as the optical signal to be wavelength-locked, and recording wavelength information of the optical signal to be wavelength-locked; wherein the wavelength identifier is used for identifying the at least one optical signal to be wavelength-locked.

9. The method of claim 8, wherein the wavelength identifier is a wavelength label.

10. The method of claim 7, wherein acquiring the wavelength deviation information of each of the at least one optical signal to be wavelength-locked comprises:
comparing an optical wavelength corresponding to each of the at least one optical signal to be wavelength-locked with a preset standard wavelength, and calculating a wavelength deviation value of each of the at least one optical signal to be wavelength-locked, wherein the wavelength deviation value comprises a wavelength deviation direction and a wavelength deviation magnitude.

11. The method of claim 10, wherein generating, according to the acquired wavelength deviation information, the associated signal, having the one-to-one correspondence with the wavelength deviation information, of the optical signal to be wavelength-locked comprises:
filling the wavelength deviation value into an associated signal frame; and
encoding the associated signal frame to generate the associated signal.

12. The wavelength locking device of claim 11, wherein an associated signal generator comprises one of:
a pilot tone signal generator;
an optical transport network, OTN, overhead signal generator; or
an Ethernet signal generator.
